**Europäisches Patentamt**

**European Patent Office**

**Office européen des brevets**

(19)

(11) Veröffentlichungsnummer: **0 235 607 B1**

(12) **EUROPÄISCHE PATENTSCHRIFT**

(45) Veröffentlichungstag der Patentschrift:
30.08.89

(51) Int. Cl.⁴: **B23B 31/04**

(21) Anmeldenummer: **87101574.9**

(22) Anmeldetag: **05.02.87**

(54) Schlüsselloses Spannfutter zum Einspannen von Bohrern oder Schlagbohrern.

(30) Priorität: **06.02.86 DE 3603644**

(43) Veröffentlichungstag der Anmeldung:
**09.09.87 Patentblatt 87/37**

(45) Bekanntmachung des Hinweises auf die Patenterteilung:
**30.08.89 Patentblatt 89/35**

(84) Benannte Vertragsstaaten:
**CH DE FR GB IT LI**

(56) Entgegenhaltungen:
**DE-A- 3 310 147**
**DE-A- 3 418 881**

(73) Patentinhaber: **Metabowerke GmbH & Co.,**
**Gerberstrasse 31, D-7440 Nürtingen(DE)**

(72) Erfinder: **Kieser, Hermann, In den Burggärten 23,**
**D-7440 Nürtingen-Oberensingen(DE)**
Erfinder: **Seyerle, Jörg, Silcherstrasse 32,**
**D-7316 Köngen(DE)**

(74) Vertreter: **Dreiss, Hosenthien & Fuhlendorf,**
**Gerokstrasse 6, D-7000 Stuttgart 1(DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die Erfindung betrifft ein schlüsselloses Spannfutter zum Einspannen von Bohrern oder Schlagbohrern gegebenenfalls mit Profilschaft für Bohrhämmer mit einem drehfest auf einer für einen Döpper hohl ausgebildeten Antriebsspindel aufgesetzten Innenkörper, mindestens drei durch eine radiale Spannbackenführung, eine Kegelhülse und einen mit der Kegelhülse verbundenen Spannbackenhalter geführten Spannbacken, wobei die radiale Spannbackenführung als auf dem freien Ende der Antriebsspindel angeordnete Hülse ausgebildet ist, deren freies Ende eine Aufnahmebohrung für einen Werkzeugschaft aufweist und Schlitz für die radiale Führung aber axiale Fixierung der Spannbacken und wobei die Kegelhülse über ein Spanngewinde in axialer Richtung unter radialer Bewegung der Spannbacken gegenüber der Spannbackenführung verstellbar ist und dazu ein Gewindeteil des Spanngewindes direkt oder indirekt mit der Kegelhülse fest verbunden ist und der nicht mit der Kegelhülse direkt oder indirekt verbundene Gewindeteil des Spanngewindes direkt oder indirekt auf der Antriebsspindel oder auf dem drehfest auf der Antriebsspindel aufgesetzten Innenkörper angeordnet ist, daß ferner eine Verriegelung in Form einer axialverschiebbaren mindestens eine Verzahnung tragenden Verriegelungshülse vorgesehen ist durch die die beiden Gewindeteile des Spanngewindes über eine weitere der Kegelhülse verbundene Verzahnung gegeneinander verriegelbar sind.

Bei einem solchen aus der DE-A 3 432 918 bekannten Spannfutter ist die Verriegelungshülse als Sperring ausgebildet. Dieser dient einmal zur Befestigung des Spannfutters auf der Bohrspindel und zum anderen zur Arretierung der Kegelhülse mit gleichzeitiger Begrenzung der Nachspannung über einen gewissen Winkelbereich. Damit können bei diesem bekannten Spannfutter die üblichen Bohrer mit zylindrischem Schaft praktisch nicht verwendet werden, da eine volle Einspannung mit immer beibehaltenem Nachspanneffekt während des Betriebs durch die Winkelbegrenzung nicht vorgesehen ist.

Weiter sind schlüssellose Bohrfutter für übliche Bohrmaschinen bekannt, deren Konstruktiver Aufbau so gestaltet ist, daß sich das Futter während des Betriebes durch das vom Werkzeug ausgeübte Reaktionsmoment selbsttätig festzieht. Dieser Selbstspanneffekt ist für schlüssellose Futter äußerst wichtig, da die von Hand aufgebrachte Spannkraft bei weitem nicht ausreicht, um das Werkzeug ausreichend festzuspannen. Bei Zahnkranzbohrfuttern, die mit einem Schlüssel festgezogen werden, ist dieser Selbstspanneffekt nicht erforderlich.

Für Bohrhämmer war die Verwendung von Bohrfuttern zur Aufnahme des Werkzeugs bisher nicht üblich. In jüngster Zeit ist jedoch zunehmend feststellbar, daß Bohrfutter zum Halten der Werkzeuge auch bei Bohrhämmern benutzt werden.

Die Drehmitnahme erfolgt dabei meist über im Werkzeugschaft angeordnete Längsnuten, in die die Spannbacken des Bohrfutters eingreifen (DE-A 2 842 783).

Die Verwendung eines Bohrfutters für Bohrhämmer bietet den Vorteil, daß auch Bohrer mit zylindrischem Schaft gespannt werden können.

So ist in der DE-A 3 310 147 ein schlüsselloses Bohrfutter für Bohrhämmer gezeigt, dessen Innenkörper hohl zur Aufnahme eines Schlagdöppers gestaltet ist. Auf diesem Innenkörper ist eine vorn kegelig ausgebildete Spannhülse aufgeschraubt, die vorn 3 Spannbacken nach Art eines Goodell-Futters enthält. Die Backen werden durch einen Federring nach außen gedrückt und durch vorn am Innenkörper radial angeordnete Schlitze geführt. Ein axiales Verstellen der Spannhülse hat eine radiale Verstellung der Spannbacken zur Folge. Diese reine Radialbewegung der Backen ist wichtig, da die Spannflächen der Backen in die entsprechenden Nuten des Werkzeugschaftes eintauchen müssen. Bei üblichen Bohrfuttern führen die Backen bekanntlich eine schräg gerichtete Bewegung entsprechend dem Spannhülsenkegel aus.

Beim Futter nach der DE-A 3 310 147 ist der bei schlüssellosen Bohrfutter übliche Selbstspanneffekt nicht vorhanden, da die Spannbacken dort in den im Innenkörper angeordneten Radialschlitzen geführt sind. Der Innenkörper ist fest mit der Bohrspindel verschraubt, so daß die Backen nicht vom Reaktionsmoment des Werkzeugs mitgedreht werden können.

Ein Spannen von Bohrern mit zylindrischem Schaft ist daher mit diesem Futter nur schlecht durchführbar, da die von Hand aufgebrachte Kraft nicht ausreicht, um das Werkzeug ausreichend festzuspannen. Ein Spannen von Schlagbohrern mit Profilschaft ist ebenfalls unbefriedigend. Schlagbohrer müssen axial beweglich eingespannt werden. Dies wird durch ein geringes Aufdrehen des Futters nach vorangegangenem Zuspannen erreicht. Dabei muß dann die leicht geöffnete Stellung arretiert werden. Beim Futter nach der DE-A 3 310 147 ist jedoch keinerlei Einrichtung zum Arretieren der erreichten Spannstellung vorgesehen.

Eine Verbesserung gegenüber dem in der obigen Druckschrift beschriebenen Bohrfutter ist in dem in der DE-A 3 310 372 gezeigten Bohrfutter erkennbar. Hierbei handelt es sich um ein Zahnkranzbohrfutter, dessen Innenkörper zur Aufnahme eines Schlagdöppers ebenfalls hohl ausgebildet ist. Vorn ist wiederum eine kegelförmig ausgebildete Hülse vorgesehen, die die 3 Spannbacken enthält. In der Kegelhülse sind im Gegensatz zur analogen Hülse nach der DE-A 3 310 147 drei Radialschlitze angeordnet in denen die Backen gegen Verdrehen geführt sind. Da die Backen auch gleichzeitig in 3 radial angeordnete Schlitze des fest mit der Bohrspindel verbundenen Innenkörpers eintauchen, ist die Kegelhülse drehfest mit dem Innenkörper verbunden. Die Kegelhülse ist außen von einer Spannhülse umgeben, die an der motorseitigen Stirnfläche einen Zahnkranz aufweist. Innen hat die Spannhülse einen rohrförmigen Ansatz mit Außengewinde, das mit einem dazu passenden Innengewinde der Kegelhülse in Eingriff steht. Ein Drehen der Spannhülse hat eine axiale Verschiebung der Kegelhülse und damit eine radiale Verstellung der Spannbacken zur Folge.

Die Spannhülse wird dabei mittels eines Bohrfutterschlüssels gedreht, der in einem Loch eines fest mit dem Innenkörper verbundenen Flanschteiles abstützbar ist.

Mit diesem Futter läßt sich ein Bohrer mit zylindrischem Schaft ausreichend fest einspannen, da durch die Benutzung eines Bohrfutterschlüssels größere Kräfte für den Spannvorgang zur Verfügung stehen als bei einem schlüssellosen Bohrfutter ohne Selbstspanneffekt. Ein Selbstspanneffekt ist auch bei diesem Futter nicht vorhanden, da die Backen drehfest mit dem Innenkörper verbunden sind.

Zum Einspannen von Schlagbohrern muß die Spannhülse nach dem Festspannen wieder leicht gelockert werden. Im Gegensatz zum Futter nach der DE-A 3 310 147 ist bei diesem Futter außen eine axial verschiebbare Verriegelungshülse vorgesehen, die die eingestellte Spannstellung arretiert. Somit ist dieses Futter zum Spannen sowohl von Bohrern mit zylindrischem Schaft als auch von Schlagbohrern mit Profilschaft geeignet. Nachteilig ist jedoch die Notwendigkeit der Benutzung eines Bohrfutterschlüssels, da dieser auf Baustellen leicht verloren geht und die Kegelverzahnung zwischen Spannhülse und Schlüssel durch den bei Bohrhämmern üblichen rauen Betrieb leicht verschleißt.

In Vermeidung der geschilderten Nachteile liegt der vorliegenden Erfindung die Aufgabe zugrunde, ein schlüsselloses Spannfutter zu schaffen, mit dem Bohrer mit zylindrischem Schaft zum Bohren fest eingespannt werden können, mit dem aber Bohrer mit Profilschaft mit der Möglichkeit des Aufhebens der selbsttätigen Nachspannung bei axialer Verschiebbarkeit einwandfrei gespannt werden können.

Zur Lösung dieser Aufgabe sieht die Erfindung vor, daß die Verriegelungshülse eine durchgehende Innenverzahnung aufweist, die mit der mit der Kegelhülse verbundenen Verzahnung und mit einer weiteren drehfest gegenüber der Antriebsspindel verbunden Verzahnung zusammenwirkt, wobei in einer Endlage die Verzahnungen im Eingriff sind und Gewindeteile des Spanngewindes gegeneinander verriegelt sind und ihrer anderen Endlage mindestens eine der Verzahnungen nicht im Eingriff mit den anderen Verzahnungen ist und so die Gewindeteile frei gegeneinander drehbar sind, und daß die als Hülse ausgebildete radiale Spannbackenführung eine zylindrische Außenführungs-fläche aufweist für eine Führungsbohrung in einer Dichtungswand des Spannbackenhalters.

Durch diese Anordnung wird das von der Antriebsspindel auf das Werkzeug zu übertragende Drehmoment über das Spanngewinde von der Antriebsspindel zu den Spannbacken übertragen, so daß die Spannkraft am Werkzeugschaft praktisch mit dem Drehmoment an der Antriebsspindel ansteigt, es sei denn die Relativbewegung im Spanngewinde wird durch die Verriegelungshülse unterbunden, so daß dann das Spanngewinde entlastet und das Drehmoment direkt über die Verriegelungshülse übertragen wird, was beim Schlagbohrbetrieb erwünscht und erforderlich ist. Ein schlagfreier Lauf des Spannfutters wird besonders einfach dadurch erreicht, daß die als Hülse ausgebildete radiale Spannbackenführung eine zylindrische Außenführungsfläche aufweist für eine Führungsbohrung in einer Dichtungswand des Spannbackenhalters.

Besonders vorteilhaft ist der mit der Kegelhülse direkt oder indirekt verbundene Gewindeteil des Spanngewindes als Muttergewinde auf der Innenseite der Kegelhülse selbst oder auf der Innenseite einer drehfest mit der Kegelhülse verbundenen Zwischenhülse vorgesehen sein. Weiter kann gewichtsparend eine Verlängerung der Zwischenhülse zugleich als Spannbackenhalter dienen, wobei dann die Spannbacken in radialen Schlitzen des Spannbackenhalters verschiebbar geführt sind. Zur exakten Führung der Spannbacken kann der Spannbackenhalter eine Kegelfläche aufweisen, die innen an der Kegelfläche der Kegelhülse anliegt, wobei im Anschluß an die radial verlaufenden Schlitze für die Spannbacken in der Kegelfläche T-förmige Erweiterungen für zwei Randvorsprünge der Spannbacken vorgesehen sein können. Hierdurch erfolgt praktisch eine Zwangsführung der Spannbacken.

Die Kegelhülse und der Spannbackenhalter sind zweckmäßigerweise fest miteinander verbunden bspw. über ein Gewinde, wobei die Gewindeverbindung gegen Lösen gesichert ist, vorzugsweise durch Verkleben. Damit bilden die Spannbackenführung, die Spannbacken und die Kegelhülse eine gegenüber der Antriebsspindel drehbare Baueinheit zusammen mit der radialen Spannbackenführung.

Die als Hülse ausgebildete radiale Spannbackenführung kann am auf der Antriebsspindel aufgesetzten Ende eine Lauffläche für ein Drucklager tragen, das auf der Antriebsspindel in einer zylindrischen Ausnehmung des Innenkörpers vorgesehen ist. Dadurch kann auch bei sehr fest angezogenem Spannfutter dieses mit geringem Kraftaufwand wieder zum raschen Werkzeugwechsel gelöst werden. Konstruktiv besonders einfach kann die als Hülse ausgebildete radiale Spannbackenführung am antriebsspindelseitigen Ende einen umlaufenden Bund aufweisen und es kann in der zylindrischen Ausnehmung des Innenkörpers ein Einstich für einen Sicherungsring vorgesehen sein, zur axialen Festlegung des Bundes der radialen Spannbackenführung gegenüber dem Innenkörper.

Beim Schlagbohren mittels eines fest eingespannten Bohrers werden die Schläge durch den Döpper auf das Werkzeug übertragen. Festgespannte Spannbacken und die damit in axialer Richtung fest verbundene Spannbackenführung, müssen die aus den Schlägen resultierenden Längsbewegungen mitmachen können. Die Einspannung der Spannbackenführung zwischen dem Sicherungsring und dem Drucklager verhindert jedoch jegliche Längsbewegung. Eine solche kann nun dadurch ermöglicht werden, daß die radiale Spannbackenführung über ein Dämpfungsglied in axialer Richtung mit der Antriebsspindel gekoppelt ist, wobei als Dämpfungsglied zweckmäßigerweise ein elastischer Ring, vorzugsweise aus Gummi, zwischen dem Bund der radialen Spannbackenführung und dessen Sicherungsring angeordnet sein kann.

Weitere erfindungsgemäße Ausbildungen sind den Unteransprüchen zu entnehmen und werden mit ihren Vorteilen in der nachfolgenden Beschreibung näher erläutert. In den beigefügten Zeichnungen zeigt:

Figur 1 einen Längsschnitt durch ein Spannfutter im oberen Teil mit geschlossenen Spannbacken im unteren Teil mit geöffneten Spannbacken,

Figur 2 eine Teildraufsicht auf eine radiale Spannbackenführung in Richtung des Pfeils II in Fig. 1 und

Figur 3 einen Teilquerschnitt entlang der Linie III-III in Fig. 1 im Bereich eines Spannbackens und

Figur 4 einen Längsschnitt durch eine andere Ausführungsform eines Spannfutters mit einem Dämpfungsglied zwischen der Spannbackenführung und der Antriebsspindel.

Auf einer für einen Döpper 1 hohl ausgebildeten Antriebsspindel 2 ist ein Innenkörper 3 aufgesetzt und durch eine Schraube 4 fixiert. Im zylindrischen Bereich 5 des Innenkörpers 3 ist ein Gewindeteil 6' eines Spanngewindes 6 vorgesehen, der mit dem Muttergewinde 6" eines Spannbackenhalters 7 zusammenwirkt.

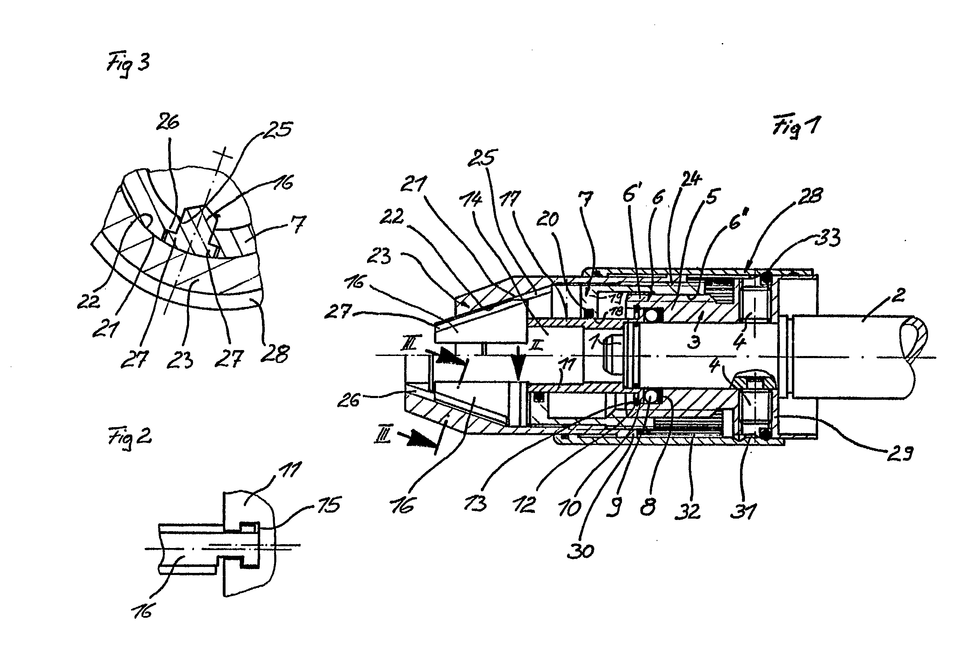

Der Innenkörper 3 weist ferner eine zylindrische Ausnehmung 8 für die Aufnahme eines Drucklagers 9 und den Bund 10 einer hülsenförmigen radialen Spannbackenführung 11 und einen in einem Einstich 12 eingesetzten Sicherungsring 13 auf, so daß die Spannbackenführung 11 gegenüber der Antriebsspindel 2 drehbar aber axial fixiert und fluchtend geführt ist. Die radiale Spannbackenführung 11 ist auf ihrer freien Seite mit einer Aufnahmebohrung 14 für die Aufnahme eines nicht näher dargestellten Werkzeugschafts versehen. Weiter ist das Ende der radialen Spannbackenführung 11 mit im Querschnitt T-förmigen Schlitzen 15 versehen, für die radiale Führung jeweils eines Spannbackens 16. Üblicherweise sind am Umfang verteilt drei Spannbacken 16 im Spannfutter angeordnet, dabei ist das antriebsspindelseitige Ende der Spannbacken 16 an den Schlitzquerschnitt 15 angepasst, wie dies in Fig. 2 dargestellt ist.

Die Außenseite der büchsenförmigen Spannbackenführung 11 dient als Außenführungsfläche 17 und durchdringt in einer Führungsbohrung 18 eine Dichtwand 19 des Spannbackenhalters 7, wobei in der Dichtwand 19 eine Rundschnurdichtung 20 eingesetzt ist.

Die Spannbacken 16 sind in radialen Schlitzen 25 im Spannbackenhalter 7 verschiebbar geführt.

Das dem Muttergewinde 6" gegenüberliegende Ende des Spannbackenhalters 7 weist eine Kegelfläche 21 auf, die innen an einer entsprechenden Kegelfläche 22 einer den Spannbackenhalter 7 umfassenden Kegelhülse 23 anliegt. Die Kegelhülse 23 und der Spannbackenhalter 7 sind über ein Gewinde 24 miteinander verschraubt, wobei zur Sicherung die Teile mindestens im Bereich des Gewindes 24 miteinander verklebt sind, es kann auch eine andere Sicherungsart gewählt werden

Die Spannbacken 16 sind weiter in einem radialen Schlitz 25 im Spannbackenhalter 7 verschiebbar geführt, wobei das kegelflächenseitige Ende jedes Schlitzes 25 im Querschnitt mit einer T-förmigen Erweiterung 26 versehen ist, in der passende Randvorsprünge 27 des Spannbacken 16 passend geführt sind, so daß die Spannbacken 16 insgesamt entlang der Kegelfläche 22 der Kegelhülse 23 zwangsgeführt sind. Zwei Stellungen der Spannbacken 16 sind in Fig. 1 dargestellt oben die Spannstellung bei der der Spannbacken 16 relativ weit in die Aufnahmebohrung 14 ragt, um ein Werkzeug mit relativ kleinem Durchmesser zu spannen und unten in der geöffneten Stellung in der der Spannbacken 16 weitgehend zurückgezogen in der Kegelhülse 23 aufgenommen und die Aufnahmebohrung 14 zum Einsetzen eines Werkzeugschafts freigegeben ist.

Beim Verstellen der Spannbacken 16 werden die Kegelhülse 23 zusammen mit den Spannbacken 16 der Spannbackenführung 11 und dem Spannbackenhalter 7 relativ zur Antriebsspindel 2 verdreht, wobei über das Spanngewinde 6 eine axiale Verschiebung der Kegelhülse 23 und des Spannbackenhalters 7 erfolgt, während die radiale Spannbackenführung 11 seine axiale Lage gegenüber der Antriebsspindel 2 beibehält. Die Steigung des Gewindes ist dabei so gewählt, daß bei einer Drehung der Antriebsspindel 2 in Arbeitsrichtung die Spannbacken 16 gespannt werden, so daß das Arbeitsdrehmoment der Antriebsspindel 2 ein sicheres Einspannen des Werkzeugschafts in den Spannbacken 16 gewährleistet. Durch das Drucklager 9 ist ein Lösen von Hand leicht möglich.

Um nun aber auch Schlagbohrer einspannen zu können, die für den Schlagbohrbetrieb in axialer Richtung ewtas verschiebbar sein müssen, um ohne wesentliche Reibungsverluste die Schläge über den Döpper 1 auf den Werkzeugschaft übertragen zu können wird das Spannfutter auf dem Profilschaft angezogen und wieder leicht gelöst, dann wird durch axiale Verschiebung einer Verriegelungshülse 28 der Innenkörper 3 mit der Kegelhülse 23 verriegelt, wozu auf einem Flanschbereich 29 den Innenkörpers 3 und dem antriebsspindelseitigen Ende der Kegelhülse 23 jeweils eine Verzahnung 30 bzw. 31 vorgesehen ist, die im dargestellten Ausführungsbeispiel in einer durchgehenden Innenverzahnung 32 der Verriegelungshülse 28 in Eingriff sind. Durch ein federndes Element 33 ist die Verriegelungshülse 28 in ihrer Lage gegenüber der Kegelhülse 23 lagegesichert, wobei in der Darstellung in Fig. 1 unten die Innenverzahnung 32 außer Eingriff mit der Verzahnung 31 des Flanschbereichs 29 ist, so daß hier die Kegelhülse 23 mit den Spannbacken 16 und dem Spannbackenhalter 7 zum Spannen und Lösen gegenüber dem Innenkörper 3 bzw. der Antriebsspindel 2 drehbar ist.

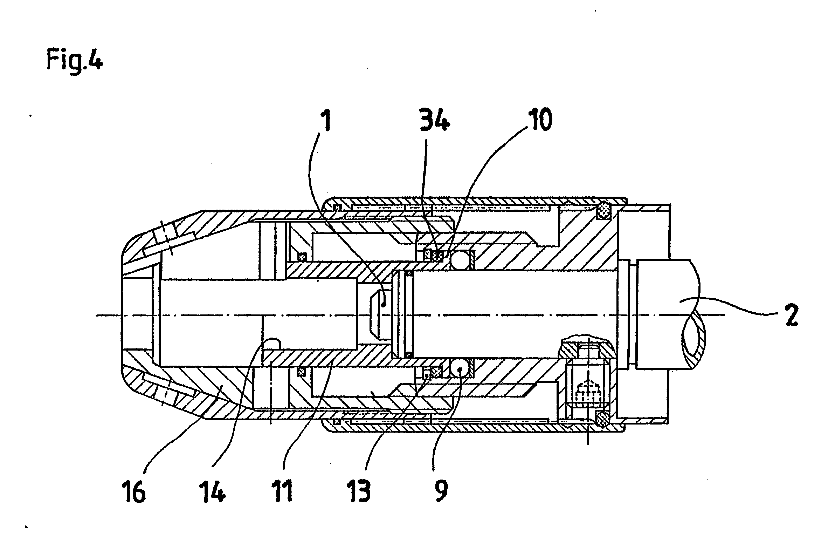

Beim Schlagbohren mittels eines fest eingespannten Bohrers werden die Schläge durch den Döpper 1 auf das Werkzeug übertragen. Festgespannte Spannbacken 16 und die damit in axialer Richtung fest verbundene Spannbackenführung 11, müssen die aus den Schlägen resultierenden Längsbewegungen mitmachen können. Eine feste Einspannung der Spannbackenführung zwischen dem Sicherungsring 13 und dem Drucklager 9 verhindert jedoch jegliche Längsbewegung. Eine solche kann gemäß Figur 4 dadurch erreicht werden, daß zwischen dem Bund 10 und dem Sicherungsring 13 ein Dämpfungsglied 34, bspw. in Form eines elastischen Rings, vorzugsweise aus Gummi, elastischem Werkstoff angeordnet werden.

## Patentansprüche

1. Schlüsselloses Spannfutter zum Einspannen von Bohrern oder Schlagbohrern gegebenenfalls mit Profilschaft für Bohrhämmer mit einem drehfest auf einer für einen Döpper (1) hohl ausgebildeten Antriebsspindel (2) aufgesetzten Innenkörper (3), mindestens drei durch eine radiale Spannbackenführung (11), eine Kegelhülse (23) und einen mit der Kegelhülse verbundenen Spannbackenhalter (7) geführten Spannbacken (16), wobei die radiale Spannbackenführung (11) als auf dem freien Ende der Antriebsspindel (2) angeordnete Hülse ausgebildet ist, deren freies Ende eine Aufnahmebohrung (14) für einen Werkzeugschaft aufweist und Schlitz (15) für die radiale Führung aber axiale Fixierung der Spannbacken (16) und wobei die Kegelhülse (23) über ein Spanngewinde (6) in axialer Richtung unter radialer Bewegung der Spannbacken (16) gegenüber der Spannbackenführung (11) verstellbar ist und dazu ein Gewindeteil (6") des Spanngewindes (6) direkt oder indirekt mit der Kegelhülse (23) fest verbunden ist und der nicht mit der Kegelhülse (23) direkt oder indirekt verbundene Gewindeteil (6') des Spanngewindes (6) direkt oder indirekt auf der Antriebsspindel (2) oder auf dem drehfest auf der Antriebsspindel (2) aufgesetzten Innenkörper (3) angeordnet ist, daß ferner eine Verriegelung in Form einer axialverschiebbaren mindestens eine Verzahnung (32) tragenden Verriegelungshülse (28) vorgesehen ist durch die die beiden Gewindeteile (6, 6') des Spanngewindes (6) über eine weitere der Kegelhülse (23) verbundene Verzahnung (30) gegeneinander verriegelbar sind, dadurch gekennzeichnet, daß die Verriegelungshülse (28) eine durchgehende Innenverzahnung (32) aufweist, die mit der mit der Kegelhülse (23) verbundenen Verzahnung (30) und mit einer weiteren drehfest gegenüber der Antriebsspindel (2) verbunden Verzahnung (31) zusammenwirkt, wobei in einer Endlage die Verzahnungen (30, 31, 32) im Eingriff sind und die Gewindeteile (6', 6") des Spanngewindes (6) gegeneinander verriegelt sind und ihrer anderen Endlage mindestens eine der Verzahnungen (30, 31) nicht im Eingriff mit den anderen Verzahnungen (32) ist und so die Gewindeteile (6, 6') frei gegeneinander drehbar sind, und daß die als Hülse ausgebildete radiale Spannbackenführung (11) eine zylindrische Außenführungsfläche (17) aufweist für eine Führungsbohrung (18) in einer Dichtungswand (19) des Spannbackenhalters (7).

2. Spannfutter nach Anspruch 1, dadurch gekennzeichnet, daß der Innenkörper (3) einen Flanschbereich (29) aufweist, der die mit der Innenverzahnung (32) der Verriegelungshülse (28) zusammenwirkende Verzahnung (21) trägt.

3. Spannfutter nach Anspruch 1 oder 2, dadurch gekennzeichnet, daß die Verriegelungshülse (28) durch ein federndes Element (33) in ihren Endlagen lagegesichert ist.

4. Spannfutter nach Anspruch 2 oder 3, dadurch gekennzeichnet, daß der mit der Kegelhülse (23) direkt oder indirekt verbundene Gewindeteil (6") des Spanngewindes (6) als Muttergewinde (6") auf der Innenseite der Kegelhülse (23) oder auf der Innenseite einer drehfest mit der Kegelhülse (23) verbundenen Zwischenhülse (Spannbackenhalter 7) vorgesehen ist.

5. Spannfutter nach Anspruch 4, dadurch gekennzeichnet, daß eine Verlängerung der Zwischenhülse zugleich als Spannbackenhalter (7) dient und daß die Spannbacken (16) in radialen Schlitzen (25) des Spannbackenhalters (7) verschiebbar geführt sind.

6. Spannfutter nach Anspruch 5, dadurch gekennzeichnet, daß der Spannbackenhalter (7) eine Kegelfläche (21) aufweist, die innen an der Kegelfläche (22) der Kegelhülse (23) anliegt, daß im Anschluß an die radial verlaufenden Schlitze (25) für die Spannbacken (16) in der Kegelfläche (21) T-förmige Erweiterungen (26) für zwei Randvorsprünge (27) der Spannbacken (16) vorgesehen sind (Fig. 3).

7. Spannfutter nach einem der Ansprüche 3 bis 5, dadurch gekennzeichnet, daß die Kegelhülse (23) und der Spannbackenhalter (7) fest miteinander verbunden sind.

8. Spannfutter nach Anspruch 7, dadurch gekennzeichnet, daß die Kegelhülse (23) und der Spannbackenhalter (7) über ein Gewinde (24) miteinander verbunden sind und daß die Gewindeverbindung gegen Lösen gesichert ist, vorzugsweise durch verkleben.

9. Spannfutter nach Anspruch 1, dadurch gekennzeichnet, daß die Schlitze (15) für die radiale Führung aber axiale Fixierung der Spannbacken (16) einen L- oder T-Querschnitt aufweisen, etwa angepasst an den Querschnitt der abtriebspindelseitigen Enden der Spannbacken (16) (Fig. 2).

10. Spannfutter nach einem der Ansprüche 1 bis 9, dadurch gekennzeichnet, daß die als Hülse ausgebildete radiale Spannbackenführung (11) am auf der Antriebsspindel (2) aufgesetzten Ende eine Lauffläche für ein Drucklager (9) aufweist, das auf der Antriebsspindel (2) in einer zylindrischen Ausnehmung (8) des Innenkörpers (3) vorgesehen ist.

11. Spannfutter nach einem der Ansprüche 8 bis 10, dadurch gekennzeichnet, daß die als Hülse ausgebildete radiale Spannbackenführung (11) am antriebsspindelseitigen Ende einen umlaufenden Bund (10) aufweist und in der zylindrischen Ausnehmung (8) des Innenkörpers (3) ein Einstich (12) für einen Sicherungsring (13) trägt zur axialen Festlegung des Bunds (10) der radialen Spannbackenführung (11).

12. Spannfutter nach einem der Ansprüche 8 bis 11, dadurch gekennzeichnet, daß die radiale Spannbackenführung (11) über ein Dämpfungsglied (34) in axialer Richtung mit der Antriebsspindel (2) gekoppelt ist.

13. Spannfutter nach Anspruch 12, dadurch gekennzeichnet, daß das Dämpfungsglied (34) ein elastischer Ring, vorzugsweise aus Gummi, ist und daß das Dämpfungsglied (34) zwischen dem Bund (10) der radialen Spannbackenführung (11) und dessen Sicherungsring (13) angeordnet ist.

## Claims

1. A key-less clamping chuck for clamping drills or hammer drills possibly with a profiled shank for drilling hammers comprising an inner body (3) which is fitted non-rotatably on a drive spindle (2) which is hollow for an anvil (1), at least three clamping jaws (16) which are guided by a radial clamping jaw guide means (11), a tapered sleeve (23) and a clamping jaw holder (7) connected to the tapered sleeve, wherein the radial clamping jaw guide means (11) is in the form of a sleeve which is arranged on the free end of the drive spindle (2) and the free end of which has a receiving bore (14) for a tool shank, and slot (15) for radially guiding but axially fixing the clamping jaws (16) and wherein the tapered sleeve (23) is adjustable by way of a clamping screwthread (6) in the axial direction with radial movement of the clamping jaws (16) relative to the clamping jaw guide means (11) and for the purpose a screwthread portion (6") of the clamping screwthread (6) is fixedly connected directly or indirectly to the tapered sleeve (23) and the screwthread portion (6') of the clamping screwthread (6) which is not directly or indirectly connected to the tapered sleeve (23) is arranged directly or indirectly on the drive spindle (2) or on the inner body (3) which is non-rotatably fitted on the drive spindle (2), and in addition there is provided a locking means in the form of an axially displaceable locking sleeve (28) which carries at least one tooth arrangement (32) and by means of which the two screwthread portions (6, 6') of the clamping screwthread (6) can be locked relative to each other by way of a further tooth arrangement (30) connected to the tapered sleeve (23), characterised in that the locking sleeve (28) has a continuous internal tooth arrangement (32) co-operating with the tooth arrangement (30) connected to the tapered sleeve (23) and with a futher tooth arrangement (31) which is connected non-rotatably with respect to the drive spindle (2), wherein in one end position the tooth arrangements (30, 31, 32) are in engagement and the screwthread portions (6', 6") of the clamping screwthread (6) are locked relative to each other and in their other end position at least one of the tooth arrangements (30, 31) is not in engagement with the other tooth arrangements (32) and thus the screwthread portions (6, 6') are freely rotatable to each other and that the radial clamping jaw guide means (11) which is in the form of a sleeve has a cylindrical external guide surface (17) for a guide bore (18) in a sealing wall (19) of the clamping jaw holder (7).

2. A chuck according to claim 1 characterized in that the inner body (3) has a flange region (29) carrying the tooth arrangement (21) which co-operates with the internal tooth arrangement (32) of the locking sleeve (28).

3. A chuck according to claim 1 or claim 2 characterized in that the locking sleeve (28) is secured in its end positions by a resilient element (33).

4. A chuck according to claim 2 or claim 3 characterized in that the screwthread portion (6") of the clamping screwthread (6) which is directly or indirectly connected to the tapered sleeve (23) is in the form of a female screwthread (6") on the inward side of the tapered sleeve (23) or on the inward side of an intermediate sleeve (clamping jaw holder 7) non-rotatably connected to the tapered sleeve (23).

5. A chuck according to claim 4 characterized in that an extension of the intermediate sleeve serves as the same time as a clamping jaw holder (7) and that the clamping jaws (16) are guided displaceably in radial slots (25) in the clamping jaw holder (7).

6. A chuck according to claim 5 characterized in that the clamping jaw holder (7) has a tapered surface (21) which bears at the inside against the tapered surface (22) of the tapered sleeve (23), and that T-shaped enlargements (26) for two edge projections (27) on the clamping jaws (16) are provided adjoining the radially extending slots (25) for the clamping jaws (16), in the tapered surface (21) (Figure 3).

7. A chuck according to one of claims 3 to 5 charcterized in that the tapered sleeve (23) and the clamping jaw holder (7) are fixedly connected together.

8. A chuck according to claim 7 characterized in that the tapered sleeve (23) and the clamping jaw holder (7) are connected together by way of a screwthread (24) and that the screwthread connection is prevented from coming loose, preferably by adhesive means.

9. A chuck according to claim 1 characterized in that the slots (15) for radially guiding but axially fixing the clamping jaws (16) are of an L-shaped or T-shaped cross-section, approximately adapted to the cross-section of the ends, which are towards the drive spindle, of the clamping jaws (16) (Figure 2).

10. A chuck according to one of claims 1 to 9 characterized in that the radial clamping jaw guide means (11) which is in the form of a sleeve has on the end fitted on the drive spindle (2) a running surface for a thrust bearing (9) provided on the drive spindle (2) in a cylindrical recess (8) in the inner body (3).

11. A chuck according to one of claims 8 to 10 characterized in that the radial jaw guide means (11) which is in form of a sleeve has a peripherally extending shoulder (10) at the end towards the drive spindle and in the cylindrical recess (8) in the inner body (3) carries a groove (12) for a securing ring (13) for axially securing the shoulder (10) of the radial clamping jaw guide means (11).

12. A chuck according to one of claims 8 to 11 characterized in that the radial clamping jaw guide means (11) is coupled to the drive spindle (2) by way of a damping member (34) in the axial direction.

13. A chuch according to claim 12 characterized in that the damping member (34) is an elastic ring, preferably rubber, and that the damping member (34) is arranged between the shoulder (10) of the radial clamping jaw guide means (11) and the securing ring (13) thereof.

## Revendications

1. Mandrin sans clef pour le serrage de forets ou de fleurets à percussion éventuellement avec un arbre profilé pour marteux de foration, ayant un corps intérieur (3) calé en rotation sur une broche d'entraînement (2) creuse pour recevoir une bouterolle (1), au moins trois mors (16) guidés par un guide-mors radial (11), un manchon conique (23) et un porte-mors (7) réuni au manchon conique, le guide-mors radial (11) étant comformé comme un manchon disposé à l'extrémité libre de la broche d'entraînement (2), l'extrémité libre de ce manchon comprenant un évidement (14) pour recevoir une tige d'outil et des fentes (15) pour le guidage radial mais l'immobilisation axiale des mors (16), le manchon conique (23) étant déplaçable en sense axial par rapport au guide-mors (11) le long d'un filetage de serrage (6) par suite du mouvement radial des mors (16) et une partie (6") dufiletage de serrage (6) étant à cette fin fermement liée directement ou indirectement avec le manchon conique (23) et la partie (6') du filetage de serrage (6) non liée directement ou indirectement avec le manchon conique (23) étant disposée directement ou indirectement sur la broche d'entraînement (2) ou sur le corps intérieur (3) calé en rotation sur la broche d'entraînement (2), un organe de verrouillage étant prévu en outre sous la forme d'un manchon de verrouillage (28) déplaçable en sens axial portant au moins une denture (32), à l'aide duquel les deux parties de filet (6', 6") du filetage de serrage (6) sont verrouillables l'une à l'autre par l'intermédiaire d'une autre denture (30) liée avec le manchon conique (23), caractérisé en ce que le manchon de verrouillage (28) comprend une denture intérieure continue (32) qui coopère avec la denture (30) liée au manchon conique (23) et avec une autre denture (31) liée et calée en rotation avec la broche d'entraînement (2), les dentures (30, 31, 32) étant en prise et les parties de filet (6', 6") du filet de serrage (6) étant verrouillées l'une avec l'autre à une postion extrême et, à leur autre position extrême, au moins une des dentures (30, 31) n'étant pas en prise avec l'autre denture (32) et, ainsi, les parties (6', 6") de filetage pouvant tourner librement l'une par rapport à l'autre, et en ce que le guide-mors (11) radial conformé comme un manchon comprend une surface de guidage (17) extérieure cylindrique pour un évidement de guidage (18) ménagé dans une paroi étanche (19) du porte-mors (7).

2. Mandrin selon la revendication 1, caractérisé en ce que le corps intérieur (3) comprend un flanc (29) qui porte la denture (21) coopérant avec la d enture intérieure (32) du manchon de verrouillage (28).

3. Mandrin selon la revendication 1 ou 2, caractérisé en ce que le manchon de verrouillage (28) est tenu à ses positions extrêmes par un élément élastique (33).

4. Mandrin selon la revendication 2 ou 3, caractérisé en ce que la partie (6 ") du filetage de serrage (6) liée directement ou indirectement avec le manchon conique (23) est prévue comme un filetage femelle (6 ") sur le côté intérieur du manchon conique (23) ou sur le côté intérieur d'un manchon intermédiaire (porte-mors (7)) lié et calé en rotation avec le manchon conique (23).

5. Mandrin selon la revendication 4, caractérisé en ce qu'un prolongement du manchon intermédiaire sert en même temps de porte-mors (7) et en ce que les mors (16) sont guidés en déplacement dans des fentes radiales (25) du portemors (7).

6. Mandrin selon la revendication 5, caractérisé en ce que le porte-mors (7) a une surface conique (21), qui s'applique contre la surface conique (22) intérieure du manchon conique (23), et en ce que des élargissements (26) faisant apparaître des formes de T sont prévus dans la surface conique (21), et se raccordent aux rainures radiales (25) destinées aux mors (16) pour contenir deux bordures latérales saillantes (27) des mors (16).

7. Mandrin selon une des revendications 3 à 5, caractérisé en ce que le manchon conique (23) et le portemors (7) sont liés fermement l'un avec l'autre.

8. Mandrin selon la revendication 7, caractérisé en ce que le manchon conique (23) et le porte-mors (7) sont liés l'un avec l'autre par l'intermédiaire d'un filetage (24) et en ce que la liaison par filetage est assurée contre tout desserrage, avantageusement par un collage.

9. Mandrin selon la revendication 1, caractérisé en ce que les fentes (15) pour le guidage radial et l'immobilisation axiale des mors (16) présentent une section droite en forme de L ou de T, correspondant à peu près à la section droite des parties extrêmes des mors (16) situées du côté de la broche d'entraînement (figure 2).

10. Mandrin selon une des revendications 1 à 9, caractérisé en ce que le guide-mors radial (11) conformé comme un manchon comprend, à son extrémité montée sur la broche d'entraînement (2), une surface de roulement pour un palier de butée (9), qui est prévu sur la broche d'entraînement (2) dans un évidement cylindrique (8) du corps intérieur (3).

11. Mandrin selon une des revendications 8 à 10, caractérisé en ce que le guide-mors radial (11) conformé comme un manchon comprend, à son extrémité située du côté de la broche d'entraînement, un épaulement périphérique (10) et dans l'évidement cylindrique (8) du corps intérieur (3) une rainure (12) tient une rondelle élastique d'arrêt (13) qui assure l'immobilisation en sens axial de l'épaulement (10) du guidemors radial (11).

12. Mandrin selon une des revendications 8 à 11, caractérisé en ce que le guide-mors radial (11) est accouplé en sens axial avec la broche d'entraînement (2) par l'intermédiaire d'un organe d'amortissement (34).

13. Mandrin selon la revendication 12, caractérisé en ce que l'organe d'amortissement (34) est une bague élastique, avantageusement en caoutchouc, et en ce que cet organe d'amortissement (34) est disposé entre l'épaulement (10) du guide-mors radial (11) et sa rondelle élastique d'arrêt (13).

Fig 1

Fig 2

Fig 3

Fig.4